# EUROPÄISCHE PATENTSCHRIFT

(11) **EP 0 585 530 B1**
(45) Veröffentlichungstag und Bekanntmachung des Hinweises auf die Patenterteilung: **27.09.1995**
(21) Anmeldenummer: 93107339.9
(22) Anmeldetag: 06.05.1993
(51) Int. Cl.: F16C 27/06, B60K 17/24

(54) **Stützlager**
Support bearing
Palier de support

(30) Priorität: 04.09.1992 DE 4229614
(43) Veröffentlichungstag der Anmeldung: 09.03.1994
(73) Patentinhaber: Firma Carl Freudenberg, 69469 Weinheim (DE)
(72) Erfinder: Bade, Karl Heinz, W-6942 Mörlenbach (DE); Schütz, Michael, W-6149 Rimbach (DE)

(56) Entgegenhaltungen:
- DE-A- 2 918 717
- DE-B- 2 457 941
- DE-C- 2 061 625
- DE-C- 3 511 480
- GB-A- 2 023 240
- US-A- 3 272 571
- US-A- 4 708 498
- US-A- 5 078 510

## Beschreibung

Die Erfindung betrifft ein Stützlager, umfassend ein Wälzlager mit einem Innen und einem Außenring sowie einen den Außenring mit radialem Abstand umschließenden Stützring, wobei der Außenring und der Stützring durch einen Zwischenring aus gummielastischem Werkstoff aneinander befestigt sind und wobei der Zwischenring durch zumindest zwei in Umfangsrichtung verteilte Stegkörper gebildet ist, die durch einen Umfangsabstand getrennt sind.

Ein solches Lager ist aus der DE-AS 20 61 625 bekannt. Das vorbekannte Lager gelangt als Zwischenlager für die Gelenkwelle von Kraftfahrzeugen zur Anwendung, wobei der Zwischenring durch mehrere, in Umfangsrichtung gleichmäßig verteilte Stegkörper aus gummielastischem Werkstoff gebildet ist. Die Stegkörper erstrecken sich zwischen dem Außenring und dem Stützring in radialer Richtung. Dabei ist allerdings zu beachten, daß die Gebrauchseigenschaften des vorbekannten Lagers während einer langen Gebrauchsdauer wenig befriedigend sind. Im Anschluß an den Herstellungsprozeß und während der bestimmungsgemäßen Verwendung des Lagers treten innerhalb der Stegkörper gebrauchsdauerverringernde Zugspannungen auf, die zu einem vorzeitigen Ausfall des Lagers führen können.

Der Erfindung liegt die Aufgabe zugrunde, ein Lager der vorbekannten Art derart weiterzuentwickeln, daß gebrauchsdauerverringernde Zugspannungen innerhalb des gummielastischen Zwischenringes zuverlässig vermieden werden und das Lager verbesserte Gebrauchseigenschaften während einer verlängerten Gebrauchsdauer aufweist. Desweiteren soll die Montage des Stützlagers durch die Verwendung weniger Einzelteile erleichtert werden.

Diese Aufgabe wird erfindungsgemäß mit Anspruch 1 gelöst. Auf vorteilhafte Ausgestaltungen nehmen die Unteransprüche Bezug.

Zur Vermeidung von Zugspannungen innerhalb des Zwischenringes aus gummielastischem Werkstoff ist es vorgesehen, daß die Stegkörper in Umfangsrichtung durch sich parallel zu der Stirnfläche eines benachbarten Stegkörpers erstreckende Stirnflächen begrenzt sind, daß alle Stirnflächen im wesentlichen eben ausgebildet und im gleichen Drehsinne geneigt sind und daß der Neigungswinkel der Stirnflächen, bezogen auf die Umfangsrichtung übereinstimmend 15 bis 75°, bevorzugt 30 bis 60° beträgt. Die herstellungsbedingten Zugspannungen, die einen gebrauchsdauerverringernden Einfluß auf gummielastische Werkstoffe haben, werden durch diese Ausgestaltung zuverlässig vermieden. Ein herstellungsbedingtes Schrumpfen der Stegkörper während der Vulkanisation bedingt nicht, wie bei in radialer Richtung angeordneten Stegkörpern Zugspannungen, sondern lediglich eine Relativverdrehung von Außenring und Stützring zueinander.

Im Hinblick auf eine hohe Tragfähigkeit des Lagers ist von Vorteil, wenn der durch die Stirnflächen gebildete Spalt eine Erstreckung in Umfangsrichtung aufweist, die höchstens so groß ist, wie der radiale Abstand zwischen dem Außenring und dem Stützring.

Hinsichtlich einer einfachen Fertigung und einer einfachen Montage des Stützlagers hat es sich als vorteilhaft bewährt, wenn die einander benachbarten Stegkörper ineinander übergehend ausgebildet und in Umfangsrichtung gleichmäßig verteilt sind. Der Stützring kann auf der dem Außenring zugewandten Seite zumindest eine Durchbrechung aufweisen, die vom Werkstoff des Zwischenringes durchdrungen ist, wobei der Werkstoff des Zwischenrings auf der den Stegkörpern abgewandten Seite der Durchbrechung ineinander übergeht. Hierbei ist von Vorteil, daß eine sichere mechanische Festlegung des Zwischenrings am Stützring erfolgt, die auch während einer langen Gebrauchsdauer unverändert erhalten bleibt.

Zur Erzielung eines besonders teilearmen und in fertigungstechnischer und wirtschaftlicher Hinsicht günstigen Aufbaus können die Stegkörper in radialer Richtung innere und äußere Halteflächen aufweisen, wobei die inneren Halteflächen mit der Mantelfläche des Außenrings und die äußeren Halteflächen mit der Innenumfangsfläche des Stützringes adhäsiv verbunden sind. Die Verwendung zusätzlicher Stütz- und Versteifungsringe ist dadurch entbehrlich.

Zur Vermeidung von mechanischen Überbeanspruchungen der Stegkörper können auf den einander zugewandten Stirnflächen in Richtung der gegenüberliegenden Stirnfläche Anschlagnoppen vorgesehen sein. Große radiale und umfangsgerichtete Relativverlagerungen des Wälzlagers und des Stützringes zueinander können durch die an den Stirnflächen angeordneten Anschlagnoppen begrenzt werden, wobei die Anschlagnoppen auf der der Gegenanschlagfläche zugewandten Seite bevorzugt ein halbkugelförmiges Profil aufweisen, so daß eine Endlagendämpfung bei Berührung der Anschlagnoppen mit der Gegenanschlagfläche einsetzt.

Das erfindungsgemäße Gummilager wird nachfolgend anhand der als Anlage beigefügten Zeichnungen näher erläutert. Die Zeichnungen zeigen Ausführungsbeispiele des Lagers in schematischer Darstellung.

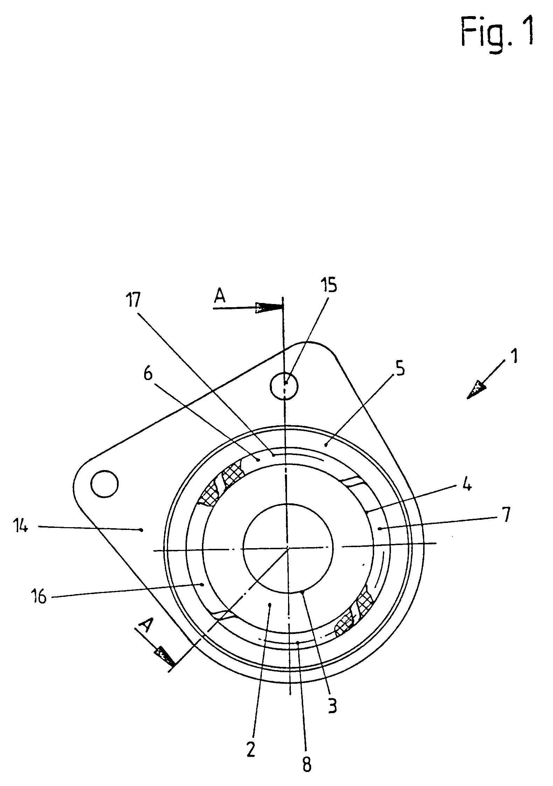

In Figur 1 ist ein Ausführungsbeispiel des erfindungsgemäßen Stützlagers in einer Ansicht gezeigt;

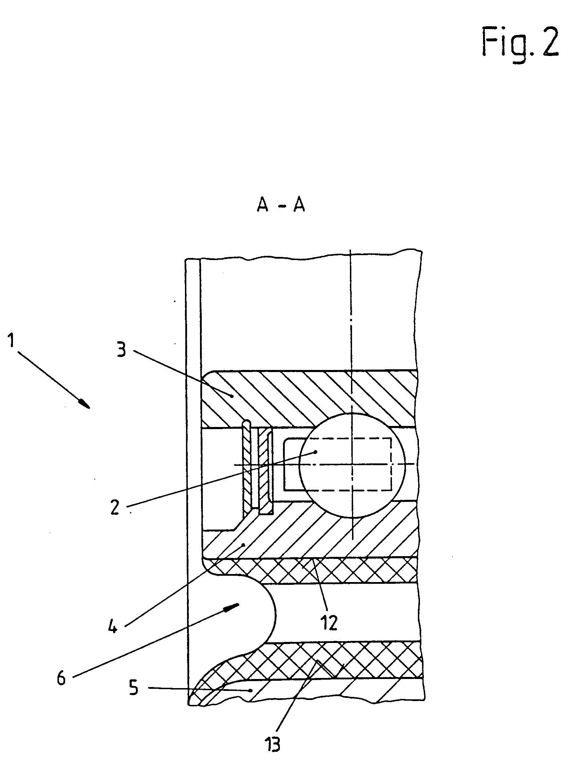

in Figur 2 ist das in Figur 1 gezeigte Ausführungsbeispiel in einem Schnitt entlang einer Linie A-A dargestellt in einem Ausschnitt vergrößert dargestellt;

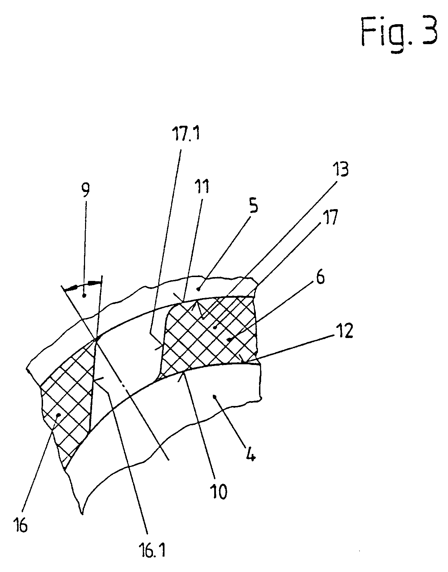

und in Figur 3 ist eine vergrößerter Ausschnitt aus Figur 1 gezeigt.

Das dargestellte Ausführungsbeispiel des Lagers gelangt beispielsweise als Zwischenwellenlager im Bereich von Kraftfahrzeugen zur Anwendung. Das Lager ist besonders teilarm aufgebaut, wobei die Stegkörper 7, 8, 16, 17 mit ihren inneren und äußeren Halteflächen 10, 11 direkt an die benachbarten Flächen von Außenring 4 und Stützring 5 anvulkanisiert sind. Der formstabile Stützring 5 ist als Befestigungselement ausgebildet und mit Befestigungsdurchbrechungen 15 im Bereich seines Radialschenkels 14 versehen. Der Zwischenring 6, der mit seinen inneren Halteflächen 10 an der Mantelfläche 12 des Außenrings 4 angelegt ist und mit seinen äußeren Halteflächen 11 an der Innenumfangsfläche 13 des Stützrings 5, umfaßt vier gleichmäßig in Umfangsrichtung verteilte Stegkörper 7, 8, 16, 17 die mit ihren in Umfangsrichtung einander zugewandten Stirnflächen 16.1, 17.1 jeweils einen Spalt begrenzen. Die Stegkörper 7, 8, 16, 17 sind mit im wesentlichen ebenen Stirnflächen 16.1, 17.1 versehen, die alle im gleichen Drehsinn geneigt sind, wobei der Neigungswinkel 9, bezogen auf die Umfangsrichtung in diesem Ausführungsbeispiel übereinstimmend 45° beträgt. Zur Begrenzung der Relativverdrehung von Außenring und Stützring 4, 5 zueinander können die Stirnflächen 16.1, 17.1 mit hier nicht dargestellten Anschlagnoppen versehen, die im wesentlichen senkrecht zu den jeweils einander benachbarten Stirnflächen stehen.

Der Vorteil gleichmäßig in Umfangsrichtung verteilter Stegkörper ist darin zu sehen, daß das Lager unter Beibehaltung gleichbleibend guter Gebrauchseigenschaften in beliebiger Lage montiert werden kann.Der Stützring 5, der in diesem Ausführungsbeispiel L-förmig ausgebildet ist, kann beispielsweise an eine Halterung des Fahrwerks oder Karosserie eines Kraftfahrzeugs geschraubt werden, wobei die Schraube die Befestigungsdurchbrechung 15 des Radialschenkels 14 durchdringt. Die Stegkörper können beispielsweise mit einer hier nicht dargestellten Armierung versteift sein, um Relaxationserscheinungen des gummielastischen Werkstoffs vorzubeugen.

## Patentansprüche

1. Stützlager, umfassend ein Wälzlager mit einem Innen-und einem Außenring (4) sowie einen den Außenring mit radialem Abstand umschließenden Stützring (5), wobei der Außenring und der Stützring durch einen Zwischenring (6) aus gummielastischem Werkstoff aneinander befestigt sind und wobei der Zwischenring durch zumindest zwei in Umfangsrichtung verteilte Stegkörper (7, 8, 16, 17) gebildet ist, die durch einen Umfangsabstand getrennt sind, dadurch gekennzeichnet, daß die Stegkörper (7, 8, 16, 17) in Umfangsrichtung durch sich parallel zu der Stirnfläche eines benachbarten Stegkörpers erstreckende Stirnflächen (16.1, 17.1) begrenzt sind, daß alle Stirnflächen (16.1, 17.1) im wesentlichen eben ausgebildet und im gleichen Drehsinn geneigt sind und daß der Neigungswinkel (9) der Stirnflächen (16.1, 17.1) bezogen auf die Umfangsrichtung übereinstimmend 15 bis 75° beträgt.

2. Stützlager nach Anspruch 1, dadurch gekennzeichnet, daß der Winkel (9) 30 bis 60° beträgt.

3. Stützlager nach Anspruch 1 bis 2, dadurch gekennzeichnet, daß der durch die Stirnflächen (16.1, 17.1) gebildete Umfangsabstand eine Erstreckung in Umfangsrichtung aufweist, die höchstens so groß ist wie seine Ausdehnung in radialer Richtung.

4. Stützlager nach Anspruch 1 bis 3, dadurch gekennzeichnet, daß die Stegkörper (7, 8, 16, 17) ineinander übergehend ausgebildet und in Umfangsrichtung gleichmäßig verteilt sind.

5. Stützlager nach Anspruch 1 bis 4, dadurch gekennzeichnet, daß die Stegkörper (7, 8, 16, 17) in radialer Richtung innere und äußere Halteflächen (10, 11) aufweisen und daß die inneren Halteflächen (10) mit der Mantelfläche (12) des Außenrings (4) und die äußeren Halteflächen (11) mit der Innenumfangsfläche (13) des Stützrings (5) adhäsiv verbunden sind.

6. Stützlager nach Anspruch 1 bis 5, dadurch gekennzeichnet, daß zumindest eine der einander zugewandten Stirnflächen (16.1, 17.1) mit einer Oberflächenprofilierung versehen ist.

7. Stützlager nach Anspruch 6, dadurch gekennzeichnet, daß die Oberflächenprofilierung durch in Richtung der gegenüberliegenden Stirnfläche vorstehende Anschlagnoppen gebildet ist.

8. Stützlager nach Anspruch 1 bis 7, dadurch gekennzeichnet, daß der Stützring (5) ein im wesentlichen L-förmiges Profil aufweist und als Befestigungselement ausgebildet ist und im Bereich seines Radialschenkels (14) mit zumindest einer Befestigungsdurchbrechung (15) versehen ist.

## Claims

1. A support bearing, comprising a rolling-contact bearing with an inner race and an outer race (4) and a supporting ring (5) which surrounds the outer race with a radial clearance, the outer race and the supporting ring being attached to one another by an intermediate ring (6) made of rubber-elastic material, and the intermediate ring being formed by at least two web bodies (7, 8, 16, 17), which are distributed in the circumferential direction and are separated by a circumferential clearance, characterized in that the web bodies (7, 8, 16, 17) are bounded in the circumferential direction by end faces (16.1, 17.1) extending parallel to the end face of an adjacent web body, in that all the end faces (16.1, 17.1) are of essentially flat design and slope in the same direction of rotation, and in that the slope angle (9) of the end faces (16.1, 17.1) in relation to the circumferential direction is in each case the same and is from 15 to 75°.

2. A support bearing according to claim 1, characterized in that the angle (9) is from 30 to 60°.

3. A support bearing according to either of claims 1 and 2, characterized in that the circumferential clearance formed by the end faces (16.1, 17.1) has an extent in the circumferential direction which is no greater than its extent in the radial direction.

4. A support bearing according to any of claims 1 to 3, characterized in that the web bodies (7, 8, 16, 17) are designed in such a way that they merge into one another and are uniformly distributed in the circumferential direction.

5. A support bearing according to any of claims 1 to 4, characterized in that the web bodies (7, 8, 16, 17) have inner and outer holding surfaces (10, 11) in the radial direction and in that the inner holding surfaces (10) are adhesively bonded to the curved surface (12) of the outer race (4) and the outer holding surfaces (11) are adhesively bonded to the inner circumferential surface (13) of the supporting ring (5).

6. A support bearing according to any of claims 1 to 5, characterized in that at least one of the mutually facing end faces (16.1, 17.1) is provided with surface profiling.

7. A support bearing according to claim 6, characterized in that the surface profiling is formed by stop knobs projecting in the direction of the opposing end face.

8. A support bearing according to any of claims 1 to 7, characterized in that the supporting ring (5) has an essentially L-shaped profile and is designed as a fastening element and is provided in the region of its radial limb (14) with at least one fastening aperture (15).

## Revendications

1. Palier de support comprenant un roulement pourvu d'une bague intérieure et d'une bague extérieure (4) ainsi qu'une bague d'appui (5) entourant la bague extérieure avec une distance radiale, la bague extérieure et la bague d'appui étant fixées l'une à l'autre par une bague intermédiaires (6) en gomme élastique et la bague intermédiaire étant formée par au moins deux corps médians (7, 8, 16, 17) répartis dans la direction circonférentielle qui sont séparés par un espace circonférentiel, caractérisé en ce que les corps médians (7, 8, 16, 17) sont limités, dans la direction circonférentielle, par des faces frontales (16.1, 17.1) s'étendant de manière parallèle à la face frontale d'un corps médian contigu, en ce que toutes les faces frontales (16.1, 17.1) sont exécutées de manière sensiblement plane et inclinées dans le même sens de rotation, et en ce que l'angle d'inclinaison (9) des faces frontales (16.1, 17.1) coïncide avec un angle de 15 à 75° par rapport à la direction circonférentielle.

2. Palier de support selon la revendication 1, caractérisé en ce que l'angle (9) mesure de 30 à 60°.

3. Palier de support selon l'une des revendications 1 à 2, caractérisé en ce que l'espace circonférentiel formé par les faces frontales (16.1, 17.1) a une étendue dans la direction circonférentielle qui est, au plus, égale à son étendue dans la direction radiale.

4. Palier de support selon l'une des revendications 1 à 3, caractérisé en ce que les corps médians (7, 8, 16, 17) sont exécutés de manière à se confondre les uns dans les autres et sont répartis de manière uniforme dans la direction circonférentielle.

5. Palier de support selon l'une des revendications 1 à 4, caractérisé en ce que les corps médians (7, 8, 16, 17) sont pourvus, dans la direction radiale, de surfaces d'appui (10, 11) internes et externes et que les surfaces d'appui internes (10) sont liées de manière adhésive à la surface périphérique (12) de la bague extérieure (4) et les surfaces d'appui externes (11) à la surface (13) de la circonférence interne de la bague d'appui (5).

6. Palier de support selon l'une des revendications 1 à 5, caractérisé en ce qu'au moins une des faces frontales (16.1, 17.1) tournées les unes vers les autres est pourvue d'un profilage superficiel.

7. Palier de support selon la revendications 6, caractérisé en ce que le profilage superficiel est formé par des nopes d'arrêt saillant dans la direction de la face frontale située en face.

8. Palier de support selon l'une des revendications 1 à 7, caractérisé en ce que la bague d'appui (5) a un profil qui a sensiblement la forme d'un L et est formée comme élément de fixation, et est pourvue d'au moins une ouverture de fixation (15) dans la région de sa branche radiale (14).
